# EUROPEAN PATENT SPECIFICATION

(11) **EP 3 061 588 B1**
(45) Date of publication and mention of the grant of the patent: **31.01.2018**
(21) Application number: 16153877.2
(22) Date of filing: 02.02.2016
(51) Int. Cl.: B29C 45/76

(54) **INJECTION MOLDING MACHINE AND OPERATION SCREEN OF INJECTION MOLDING MACHINE**
SPRITZGIESSMASCHINE UND OPERATIONSBILDSCHIRM EINER SPRITZGIESSMASCHINE
MACHINE DE MOULAGE PAR INJECTION ET ÉCRAN DE FONCTIONNEMENT D'UNE TELLE MACHINE

(30) Priority: 27.02.2015 JP 2015039372
(43) Date of publication of application: 31.08.2016
(73) Proprietor: SUMITOMO HEAVY INDUSTRIES, LTD., Tokyo 141-6025 (JP)
(72) Inventor: SHIMIZU, Kohei, Chiba, 263-0001 (JP)
(74) Representative: Louis Pöhlau Lohrentz

(56) References cited:
- EP-A1- 0 700 768
- EP-A2- 0 320 906
- GB-A- 794 037
- JP-A- H01 108 017
- JP-A- 2006 015 527

## Description

### BACKGROUND OF THE INVENTION

### Field of the Invention

### Description of Related Art

The present invention relates to an injection molding machine and an operation screen of an injection molding machine.

An injection molding machine executes molding processes such as a mold closing process of performing mold closing of a mold unit, a mold clamping process of performing mold clamping of the mold unit, a filling process of filling the mold unit with a molding material, a hold pressure process of applying a pressure to the molding material in the mold unit, a cooling process of cooling the molding material in the mold unit, a mold opening process of performing mold opening of the mold unit, and an ejector process of pushing a molding product out from the mold unit, thereby manufacturing the molding product (refer to, for example, Japanese Unexamined Patent Application Publication No. 2011-183705). EP 0 700 768 A1, JP 2006 015527 A, EP 0 320 906 A2 and JP H01 108017 A disclose an injection molding machine. The injection molding machine repeatedly performs a series of molding processes, thereby repeatedly manufacturing a molding product. The time it takes to perform a single molding is called a cycle time.

A technique capable of adjusting the cycle time has been desired.

### SUMMARY OF THE INVENTION

The present invention has been made in view of the above problem and has a main object to provide an injection molding machine in which it is possible to adjust a cycle time.

In order to solve the above problem, according to an aspect of the present invention, there is provided an injection molding machine including: a controller which controls a plurality of molding processes; and a display unit which displays an operation screen which is used in setting of the plurality of molding processes, in which the operation screen includes an overlap amount input section for entering an overlap amount between the plurality of molding processes. The operation screen includes an overlap amount limit input section for entering a limit of a range capable of being entered into the overlap amount input section.

According to the aspect of the present invention, an injection molding machine in which it is possible to adjust a cycle time is provided.

### BRIEF DESCRIPTION OF THE DRAWINGS

Fig. 1 is a diagram showing a state at the time of mold opening completion of an injection molding machine according to an embodiment.
Fig. 2 is a diagram showing a state at the time of mold clamping of the injection molding machine according to the embodiment.
Fig. 3 is a diagram showing an operation screen which is used in the setting of an overlap amount between a mold closing process and a filling process according to the embodiment.
Fig. 4 is a diagram showing an operation screen having a password input section according to the embodiment.
Fig. 5 is a diagram showing an operation screen which is used in the setting of an overlap amount between a cooling process and a mold opening process according to the embodiment.
Fig. 6 is a diagram showing an operation screen which is used in the setting of an overlap amount between an ejector process and a mold closing process according to the embodiment.

### DETAILED DESCRIPTION OF THE INVENTION

Hereinafter, a mode for carrying out the present invention will be described with reference to the drawings. However, in each of the drawings, an identical or a corresponding configuration is denoted by an identical or a corresponding reference numeral and a description thereof is omitted.

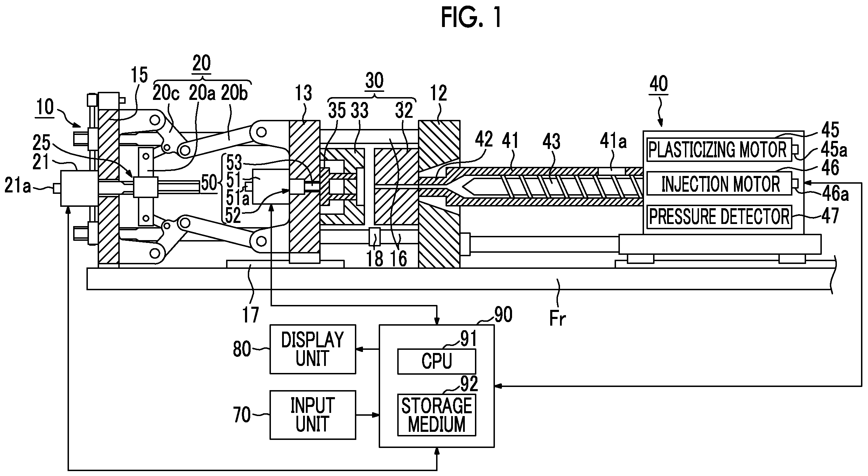

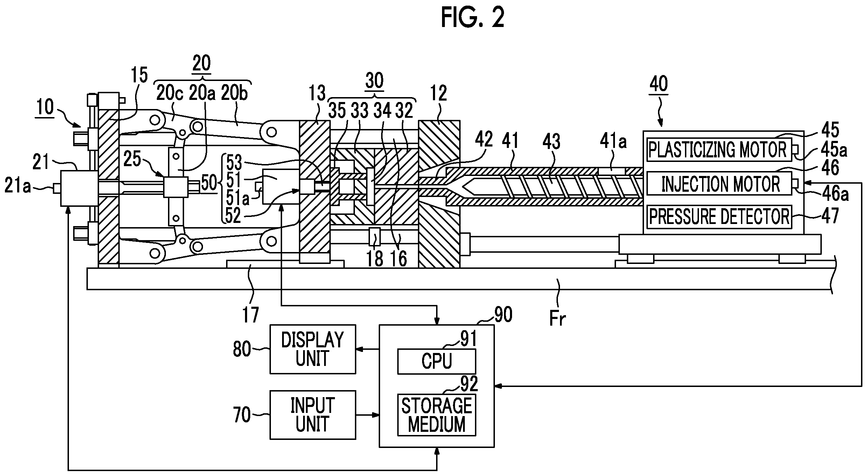

Fig. 1 is a diagram showing a state at the time of mold opening completion of an injection molding machine according to an embodiment. Fig. 2 is a diagram showing a state at the time of mold clamping of the injection molding machine according to the embodiment. The injection molding machine shown in Figs. 1 and 2 has a frame Fr, a mold clamping unit 10, an injection unit 40, an ejector unit 50, an input unit 70, a display unit 80, a controller 90, and the like.

The mold clamping unit 10 performs mold closing, mold clamping, and mold opening of a mold unit 30. The mold clamping unit 10 has a stationary platen 12, a movable platen 13, a rear platen 15, a tie bar 16, a toggle mechanism 20, a mold clamping motor 21, and a motion conversion mechanism 25. In the description of the mold clamping unit 10, a direction of movement (the rightward direction in Figs. 1 and 2) of the movable platen 13 when performing the mold closing will be described as being forward and a direction of movement (the leftward direction in Figs. 1 and 2) of the movable platen 13 when performing the mold opening as being backward.

The stationary platen 12 is fixed to the frame Fr. A stationary mold 32 is mounted on the surface facing the movable platen 13 in the stationary platen 12.

The movable platen 13 is made so as to be able to move along a guide (for example, a guide rail) 17 which is laid on the frame Fr, and is made so as to be able to advance and retract with respect to the stationary platen 12. A movable mold 33 is mounted on the surface facing the stationary platen 12 in the movable platen 13.

The movable platen 13 advances and retracts with respect to the stationary platen 12, whereby the mold closing, the mold clamping, and the mold opening are performed. The mold unit 30 is configured with the stationary mold 32 and the movable mold 33.

The rear platen 15 is connected to the stationary platen 12 with a distance therebetween and is placed on the frame Fr so as to be able to move in a mold opening and closing direction. In addition, the rear platen 15 may be made so as to be able to move along a guide which is laid on the frame Fr. The guide of the rear platen 15 may be shared by the guide 17 of the movable platen 13.

In addition, in this embodiment, a configuration is made such that the stationary platen 12 is fixed to the frame Fr and the rear platen 15 is movable in the mold opening and closing direction with respect to the frame Fr. However, a configuration may be made such that the rear platen 15 is fixed to the frame Fr and the stationary platen 12 is movable in the mold opening and closing direction with respect to the frame Fr.

The tie bar 16 connects the stationary platen 12 and the rear platen 15 with a distance therebetween. A plurality of tie bars 16 may be used. The respective tie bars 16 are made so as to be parallel to each other in the mold opening and closing direction and extend according to a mold clamping force. A mold clamping force detector 18 may be provided in at least one of the tie bars 16. The mold clamping force detector 18 may be a strain gauge type and detects the strain of the tie bar 16, thereby detecting the mold clamping force.

In addition, the mold clamping force detector 18 is not limited to the strain gauge type and may be a piezoelectric type, a capacitive type, a hydraulic type, an electromagnetic type, or the like, and a mounting position thereof is also not limited to the tie bar 16.

The toggle mechanism 20 is disposed between the movable platen 13 and the rear platen 15. The toggle mechanism 20 is configured with a cross head 20a, a plurality of links 20b and 20c, and the like. The link 20b on one side is oscillatably mounted on the movable platen 13, and the link 20c on the other side is oscillatably mounted on the rear platen 15. The links 20b and 20c are connected to each other by a pin or the like so as to be able to be bent and stretched. The plurality of links 20b and 20c are bent and stretched by advancing and retracting the cross head 20a, whereby the movable platen 13 advances and retracts with respect to the rear platen 15.

The mold clamping motor 21 is mounted on the rear platen 15 and advances and retracts the cross head 20a, thereby advancing and retracting the movable platen 13. The motion conversion mechanism 25 for converting the rotation motion of the mold clamping motor 21 into linear motion and transmitting the linear motion to the cross head 20a is provided between the mold clamping motor 21 and the cross head 20a. The motion conversion mechanism 25 is configured with, for example, a ball screw mechanism.

An operation of the mold clamping unit 10 is controlled by the controller 90. The controller 90 controls a mold closing process, a mold clamping process, a mold opening process, and the like as molding processes.

In the mold closing process, the movable mold 33 is brought into contact with the stationary mold 32 by advancing the movable platen 13 by driving the mold clamping motor 21. The position or the speed of the movable platen 13 is detected by, for example, an encoder 21a of the mold clamping motor 21.

In the mold clamping process, the mold clamping force is generated by further driving the mold clamping motor 21. At the time of the mold clamping, a cavity 34 is formed between the movable mold 33 and the stationary mold 32, and the cavity 34 is filled with a liquid molding material. The molding material in the cavity 34 is solidified, thereby becoming a molding product.

In the mold opening process, the movable mold 33 is separated from the stationary mold 32 by retracting the movable platen 13 by driving the mold clamping motor 21.

In addition, the mold clamping unit 10 of this embodiment has the mold clamping motor 21 as a drive source. However, the mold clamping unit 10 may have a hydraulic cylinder, instead of the mold clamping motor 21. Further, the mold clamping unit 10 may have a linear motor for the mold opening and closing and have an electromagnet for the mold clamping.

The ejector unit 50 pushes the molding product out from the mold unit 30. The ejector unit 50 has, for example, an ejector motor 51, a motion conversion mechanism 52, and an ejector rod 53. In the description of the ejector unit 50, similar to the description of the mold clamping unit 10, a direction of movement (the rightward direction in Figs. 1 and 2) of the movable platen 13 when performing the mold closing will be described as being forward and a direction of movement (the leftward direction in Figs. 1 and 2) of the movable platen 13 when performing the mold opening as being backward.

The ejector motor 51 is mounted on the movable platen 13. The ejector motor is directly connected to the motion conversion mechanism 52. However, the ejector motor may be connected to the motion conversion mechanism 52 through a belt, a pulley, or the like.

The motion conversion mechanism 52 converts the rotation motion of the ejector motor 51 into the linear motion of the ejector rod 53. The motion conversion mechanism 52 is configured with, for example, a ball screw mechanism or the like.

The ejector rod 53 is made so as to be able to advance and retract in a through-hole of the movable platen 13. A front end portion of the ejector rod 53 comes into contact with a movable member 35 which is disposed in the movable mold 33 so as to be able to advance and retract. In addition, the ejector rod 53 may be connected to the movable member 35.

An operation of the ejector unit 50 is controlled by the controller 90. The controller 90 controls an ejector process or the like as a molding process.

In the ejector process, the ejector motor 51 is driven, thereby advancing the ejector rod 53, whereby the movable member 35 is advanced, thereby pushing the molding product out. Thereafter, the ejector motor 51 is driven, thereby retracting the ejector rod 53, whereby the movable member 35 retracts to the original position. The position or the speed of the ejector rod 53 is detected by, for example, an encoder 51a of the ejector motor 51.

The injection unit 40 comes into contact with the mold unit 30 and fills the mold unit 30 with a molding material. The injection unit 40 has, for example, a cylinder 41, a nozzle 42, a screw 43, a plasticizing motor 45, an injection motor 46, and a pressure detector 47. In the description of the injection unit 40, unlike the description of the mold clamping unit 10, a direction of movement (the leftward direction in Figs. 1 and 2) of the screw 43 when performing filling will be described as being forward and a direction of movement (the rightward direction in Figs. 1 and 2) of the screw 43 when performing plasticizing as being backward.

The cylinder 41 heats the molding material fed from a feed port 41a. The feed port 41a is formed in a rear portion of the cylinder 41. A heat source such as a heater is provided in the outer periphery of the cylinder 41.

The nozzle 42 is provided at a front end portion of the cylinder 41 and pressed against the mold unit 30.

The screw 43 is disposed so as to be rotatable and be able to advance and retract in the cylinder 41.

The plasticizing motor 45 rotates the screw 43, thereby sending the molding material forward along a helical groove of the screw 43. The molding material is gradually melted by heat from the cylinder 41 while being sent forward. The screw 43 retracts as a liquid molding material is sent to the front of the screw 43 and accumulated in a front portion of the cylinder 41.

The injection motor 46 advances and retracts the screw 43. The injection motor 46 advances the screw 43, thereby making the cavity 34 of the mold unit 30 be filled with the liquid molding material accumulated in front of the screw 43. Thereafter, the injection motor 46 presses the screw 43 forward, thereby applying a pressure to the molding material in the cavity 34. A molding material can be replenished when there is a shortage thereof. A motion conversion mechanism for converting the rotation motion of the injection motor 46 into the linear motion of the screw 43 is provided between the injection motor 46 and the screw 43.

The pressure detector 47 is disposed, for example, between the injection motor 46 and the screw 43 and detects a pressure which the screw 43 receives from the molding material, a back pressure against the screw 43, or the like. The pressure which the screw 43 receives from the molding material corresponds to a pressure acting on the molding material from the screw 43.

An operation of the injection unit 40 is controlled by the controller 90. The controller 90 controls a filling process, a hold pressure process, a plasticizing process, and the like as molding processes.

In the filling process, the injection motor 46 is driven, thereby advancing the screw 43 at a set speed and thus making the mold unit 30 be filled with the liquid molding material accumulated in front of the screw 43. The position or the speed of the screw 43 is detected by, for example, an encoder 46a of the injection motor 46. If the position of the screw 43 reaches a predetermined position, switching (so-called V/P switching) from the filling process to the hold pressure process is performed.

In addition, a configuration may be made in which after the position of the screw 43 reaches a predetermined position in the filling process, the screw 43 is temporarily stopped at the predetermined position and thereafter, the V/P switching is performed. Immediately before the V/P switching, instead of stopping of the screw 43, very slow speed advance or very slow speed retraction of the screw 43 may be performed.

In the hold pressure process, the injection motor 46 is driven, thereby pressing the screw 43 forward at a set pressure and thus applying pressure to the molding material in the mold unit 30. A molding material can be replenished when there is a shortage thereof. The pressure of the molding material is detected by, for example, the pressure detector 47. After the hold pressure process, a cooling process is started. In the cooling process, solidification of the molding material in the cavity 34 is performed. The plasticizingprocess maybe performed during the cooling process. The cooling process is performed during a set time.

In the plasticizing process, the plasticizing motor 45 is driven, thereby rotating the screw 43 at a set rotational frequency and thus sending the molding material forward along the helical groove of the screw 43. Accordingly, the molding material is gradually melted. The screw 43 retracts as a liquid molding material is sent to the front of the screw 43 and accumulated in the front portion of the cylinder 41. The rotational frequency of the screw 43 is detected by, for example, an encoder 45a of the plasticizing motor 45.

In the plasticizing process, in order to prohibit the rapid retraction of the screw 43, set back pressure may be applied to the screw 43 by driving the injection motor 46. The back pressure against the screw 43 is detected by, for example, the pressure detector 47. If the screw 43 retracts to a predetermined position and a predetermined amount of molding material is accumulated in front of the screw 43, the plasticizing process is ended.

In addition, the injection unit 40 of this embodiment is an inline screw type. However, the injection unit 40 may be a pre-plasticizing type or the like. In an injection unit of a pre-plasticizing type, a molding material melted in a plasticizing cylinder is fed into an injection cylinder and the molding material is then injected from the injection cylinder into a mold unit.

The controller 90 has a central processing unit (CPU) 91 and a storage medium 92 such as a memory. The controller 90 controls the mold clamping unit 10, the injection unit 40, the ejector unit 50, the input unit 70, the display unit 80, and the like by executing a program stored in the storage medium 92 in the CPU 91.

The input unit 70 and the display unit 80 may be configured with, for example, a touch panel and be integrated. The input unit 70 receives an input operation by an operator and outputs a signal corresponding to the input operation to the controller 90. The display unit 80 displays an operation screen corresponding to the input operation in the input unit 70 under control by the controller 90. The operation screen is used in the setting of the plurality of molding processes of the injection molding machine. A plurality of operation screens are prepared and are changed over and displayed or displayed with an overlap. An operator performs the setting of the injection molding machine by operating the input unit 70 while looking at the operation screen which is displayed on the display unit 80.

In addition, the input unit 70 and the display unit 80 of this embodiment are integrated. However, the input unit 70 and the display unit 80 may be independently provided. Further, a plurality of input units 70 may be provided.

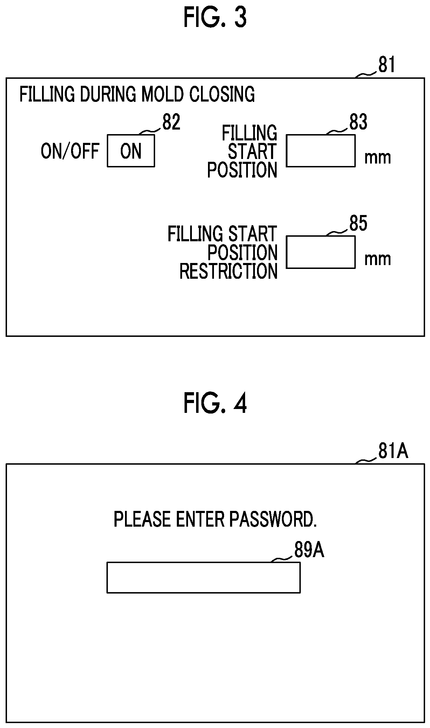

Fig. 3 is a diagram showing an operation screen which is used in the setting of an overlap amount between the mold closing process and the filling process according to the embodiment. An operation screen 81 shown in Fig. 3 has a mode input section 82, an overlap amount input section 83, and an overlap amount limit input section 85.

The mode input section 82 is an input box for selecting whether or not to start the filling process during the mold closing process. The current setting may be displayed in a letter or the like on the mode input section 82. For example, in a case where the letter which is displayed on the mode input section 82 is "ON", as shown in Fig. 3, the filling process is started during the mold closing process. On the other hand, in a case where the letter which is displayed on the mode input section 82 is "OFF", the filling process is started after the mold closing process.

In addition, the letter which is displayed on the mode input section 82 may be various. For example, instead of "OFF", letters such as "UNUSED" or "NORMAL MODE" may be displayed. Further, instead of "ON", letters such as "USE" or "MOLD CLOSING FILLING MODE" may be displayed. Further, instead of a letter, a symbol, a graphic, or the like may be displayed.

An operator operates the input unit 70 while looking at the operation screen 81, thereby selecting whether or not to start the filling process during the mold closing process. The controller 90 determines whether or not to start the filling process during the mold closing process, according to the user' s selection result.

The overlap amount input section 83 is an input box for entering an overlap amount between the mold closing process and the filling process. The overlap amount may be expressed by the position of the movable platen 13. The position of the movable platen 13 may be expressed by a remaining distance to a reference position. Here, the reference position of the movable platen 13 can be arbitrarily set. However, the reference position may be, for example, a mechanical advance limit position. The position of the movable platen 13 at the time of the start of the filling process is hereinafter referred to as a filling start position. The position of the movable platen 13 can also be expressed by the position of the cross head 20a. In addition, the overlap amount may be expressed by time rather than a position.

The overlap amount input section 83 may be an input box for entering the filling start position as a numerical value and may be an input box for selecting the filling start position from a plurality of candidates determined in advance. In the latter case, a candidate list may be displayed as pop-up display on the operation screen 81 according to a predetermined input operation. An operator can select the filling start position for actual use, from the plurality of candidates determined in advance, by operating the input unit 70 while looking at the candidate list. The current setting may be displayed with a numerical value on the overlap amount input section 83. In addition, in the case of a selection type rather than a numerical value input type, instead of a numerical value, a letter representing an amount, such as "large", "medium", and "small", may be displayed.

An operator enters the filling start position into the overlap amount input section 83 by operating the input unit 70 while looking at the operation screen 81. The controller 90 monitors the position of the movable platen 13 during the mold closing process and starts the filling process when the movable platen 13 has reached the filling start position. The cycle time can be shortened by making the mold closing process and the filling process overlap each other. Further, the cycle time can be adjusted by adjusting the overlap amount.

The overlap amount limit input section 85 is an input box for entering a limit of a range capable of being entered into the overlap amount input section 83. The controller 90 prohibits input outside the above range in the overlap amount input section 83. It is possible to prevent incorrect setting of the filling start position by an operator. The current setting may be displayed with a numerical value or the like on the overlap amount limit input section 85.

For example, the overlap amount limit input section 85 may be an input box for entering the upper limit of the filling start position. The controller 90 prohibits input exceeding the upper limit in the overlap amount input section 83. The upper limit of the filling start position is set such that the mold closing process is completed, for example, before the flow front of the molding material reaches a gate of the cavity 34, and is set based on the result of a test or simulation. A molding defect such as a flash can be suppressed.

In addition, the overlap amount limit input section 85 of this embodiment is an input box for entering the upper limit of the filling start position. However, the overlap amount limit input section 85 may be an input box for entering the lower limit of the filling start position. The controller 90 prohibits input below the lower limit in the overlap amount input section 83. The cycle time can be significantly shortened by setting the lower limit. Both the input boxes may be provided in the operation screen 81.

Fig. 4 is a diagram showing an operation screen having a password input section according to the embodiment. An operation screen 81A shown in Fig. 4 is displayed by a predetermined input operation. The operation screen 81A has a password input section 89A.

The password input section 89A is an input box for entering a password. The password is used to cancel the input prohibition in the overlap amount limit input section 85, for example. The password is disclosed to only some operators. Only a specific operator can change the setting of the limit of the overlap amount.

An operator enters a password into the password input section 89A by operating the input unit 70 while looking at the operation screen 81A. The controller 90 collates the password entered into the password input section 89A with the password registered in the storage medium 92 in advance, thereby confirming the validity of the entered password. In a case where the entered password is a valid password, the controller 90 cancels the input prohibition in the overlap amount limit input section 85. In this way, the input in the overlap amount limit input section 85 is permitted, and thus a change in the setting of limit of the overlap amount becomes possible. Thereafter, the controller 90 may resume the input prohibition in the overlap amount limit input section 85 in a case where the setting change has been finished, a case where a predetermined time has elapsed, or the like.

In addition, the overlap amount limit input section 85 of this embodiment is provided in the same operation screen as the overlap amount input section 83. However, the overlap amount limit input section 85 may be provided in a different operation screen and be changed over and displayed. The overlap amount limit input section 85 may be displayed only in a case where a valid password has been entered into the password input section 89A.

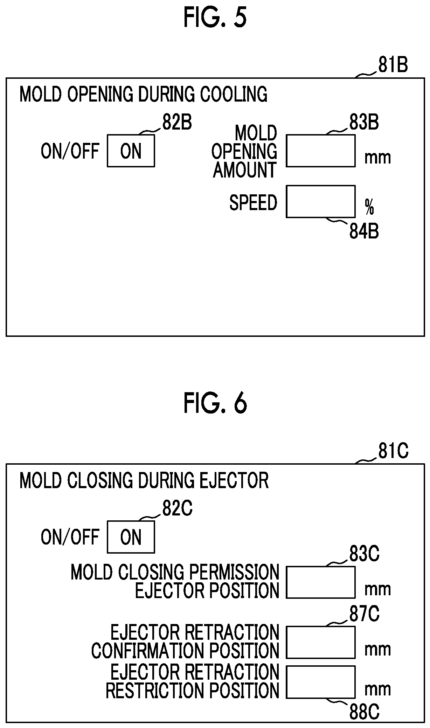

Fig. 5 is a diagram showing an operation screen which is used in the setting of an overlap amount between the cooling process and the mold opening process according to the embodiment. An operation screen 81B shown in Fig. 5 has a mode input section 82B, a first overlap amount input section 83B, and a second overlap amount input section 84B.

The mode input section 82B is an input box for selecting whether or not to start the mold opening process during the cooling process. The current setting may be displayed in a letter or the like on the mode input section 82B. For example, in a case where the letter which is displayed on the mode input section 82B is "ON", as shown in Fig. 5, the mold opening process is started during the cooling process. On the other hand, in a case where the letter which is displayed on the mode input section 82B is "OFF", the mold opening process is started after the cooling process.

In addition, the letter which is displayed on the mode input section 82B may be various. For example, instead of "OFF", letters such as "UNUSED" or "NORMAL MODE" may be displayed. Further, instead of "ON", letters such as "USE" or "COOLING MOLD OPENING MODE" may be displayed. Further, instead of a letter, a symbol, a graphic, or the like may be displayed.

An operator operates the input unit 70 while looking at the operation screen 81B, thereby selecting whether or not to start the mold opening process during the cooling process. The controller 90 determines whether or not to start the mold opening process during the cooling process, according to the user's selection result.

The first overlap amount input section 83B is an input box for entering a first overlap amount between the cooling process and the mold opening process. The first overlap amount may be expressed by a mold opening amount. The mold opening amount is the distance between the stationary mold 32 and the movable mold 33. The mold opening amount may be expressed by the position of the movable platen 13. The position of the movable platen 13 may be expressed by a retraction distance from a reference position. Here, the reference position of the movable platen 13 can be arbitrarily set, as described above. The position of the movable platen 13 can also be expressed by the position of the cross head 20a.

The first overlap amount input section 83B may be an input box for entering the mold opening amount as a numerical value and may be an input box for selecting the mold opening amount from a plurality of candidates determined in advance. In the latter case, a candidate list may be displayed as pop-up display on the operation screen 81B according to a predetermined input operation. An operator can select the mold opening amount for actual use, from the plurality of candidates determined in advance, by operating the input unit 70 while looking at the candidate list. The current setting may be displayed with a numerical value on the first overlap amount input section 83B. In addition, in the case of a selection type rather than a numerical value input type, instead of a numerical value, a letter representing an amount, such as "large", "medium", and "small", may be displayed.

An operator enters the mold opening amount into the first overlap amount input section 83B by operating the input unit 70 while looking at the operation screen 81B. The controller 90 starts the mold opening process from the middle of the cooling process such that the mold opening amount reaches a setting value at the time of the completion of the cooling process. The cycle time can be shortened by making the cooling process and the mold opening process overlap each other. Further, the cycle time can be adjusted by adjusting the overlap amount.

The second overlap amount input section 84B is an input box for entering a second overlap amount between the cooling process and the mold opening process. The second overlap amount may be expressed by a mold opening speed. The mold opening speed is the retraction speed of the movable mold 33. The mold opening speed can be detected by, for example, the encoder 21a of the mold clamping motor 21. The mold opening speed may be expressed by % with a mold opening speed when the mold clamping motor 21 is rotated at a rating being 100%. In a case where the mold opening amount at the time of the completion of the cooling process is the same, the slower the mold opening speed, the longer the overlap time.

The second overlap amount input section 84B may be an input box for entering the mold opening speed as a numerical value and may be an input box for selecting the mold opening speed from a plurality of candidates determined in advance. In the latter case, a candidate list may be displayed as pop-up display on the operation screen 81B according to a predetermined input operation. An operator can select the mold opening speed for actual use, from the plurality of candidates determined in advance, by operating the input unit 70 while looking at the candidate list. The current setting may be displayed with a numerical value on the second overlap amount input section 84B. In addition, in the case of a selection type rather than a numerical value input type, instead of a numerical value, a letter representing an amount, such as "large", "medium", and "small", may be displayed.

An operator enters the mold opening speed into the second overlap amount input section 84B by operating the input unit 70 while looking at the operation screen 81B. The controller 90 starts the mold opening process from the middle of the cooling process and controls the mold clamping motor 21 such that the mold opening speed reaches a setting value. The cycle time can be shortened by making the cooling process and the mold opening process overlap each other. Further, the cycle time can be adjusted by adjusting the overlap amount.

In addition, the operation screen 81B may have at least one of a first overlap amount limit input section and a second overlap amount limit input section. The first overlap amount limit input section is an input box for entering a limit of a range capable of being entered into the first overlap amount input section 83B. The second overlap amount limit input section is an input box for entering a limit of a range capable of being entered into the second overlap amount input section 84B. It is possible to suppress a molding defect due to insufficient cooling or significantly shorten the cycle time.

A password may be set such that only a specific operator can change the setting of the limit of the first overlap amount or the limit of the second overlap amount. The password may be set for each type of overlap amount. A password input section for entering the password is the same as the password input section 89A shown in Fig. 3, and therefore, illustration and description thereof are omitted.

Fig. 6 is a diagram showing an operation screen which is used in the setting of an overlap amount between the ejector process and the mold closing process according to the embodiment.

An operation screen 81C shown in Fig. 6 has a mode input section 82C, an overlap amount input section 83C, a remaining amount input section 87C, and a remaining amount limit input section 88C.

The mode input section 82C is an input box for selecting whether or not to start the mold closing process during the ejector process. The current setting may be displayed in a letter or the like on the mode input section 82C. For example, in a case where the letter which is displayed on the mode input section 82C is "ON", as shown in Fig. 6, the mold closing process is started during the ejector process. For example, the mold closing process is started in the middle of a retraction of the ejector rod 53 from the advance completion position to the retraction completion position. On the other hand, in a case where the letter which is displayed on the mode input section 82C is "OFF", the mold closing process is started after the ejector process.

In addition, the letter which is displayed on the mode input section 82C may be various. For example, instead of "OFF", letters such as "UNUSED" or "NORMAL MODE" may be displayed. Further, instead of "ON", letters such as "USE" or "EJECTOR MOLD CLOSING MODE" may be displayed. Further, instead of a letter, a symbol, a graphic, or the like may be displayed.

An operator operates the input unit 70 while looking at the operation screen 81C, thereby selecting whether or not to start the mold closing process during the ejector process. The controller 90 determines whether or not to start the mold closing process during the ejector process, according to the user's selection result.

The overlap amount input section 83C is an input box for entering an overlap amount between the ejector process and the mold closing process. The overlap amount may be expressed by the position of the ejector rod 53. The position of the ejector rod 53 may be expressed by the remaining distance to a reference position. Here, the reference position of the ejector rod 53 can be arbitrarily set. However, the reference position may be a position at the time of completion of the ejector process (a retraction completion position). The position of the ejector rod 53 when starting the mold closing process is hereinafter referred to as a mold closing permission ejector position. In addition, the overlap amount may be expressed by the position of the movable member 35. Further, the overlap amount may be expressed by time rather than a position.

The overlap amount input section 83C may be an input box for entering the mold closing permission ejector position as a numerical value and may be an input box for selecting the mold closing permission ejector position from a plurality of candidates determined in advance. In the latter case, a candidate list may be displayed as pop-up display on the operation screen 81C according to a predetermined input operation. An operator can select the mold closing permission ejector position for actual use, from the plurality of candidates determined in advance, by operating the input unit 70 while looking at the candidate list. The current setting may be displayed with a numerical value on the overlap amount input section 83C. In addition, in the case of a selection type rather than a numerical value input type, instead of a numerical value, a letter representing an amount, such as "large", "medium", and "small", may be displayed.

An operator enters the mold closing permission ejector position into the overlap amount input section 83C by operating the input unit 70 while looking at the operation screen 81C. The controller 90 monitors the position of the ejector rod 53 during the ejector process and starts the mold closing process when the ejector rod 53 has reached the mold closing permission ejector position. The cycle time can be shortened by making the ejector process and the mold closing process overlap each other. Further, the cycle time can be adjusted by adjusting the overlap amount.

The remaining amount input section 87C is an input box for entering a timing of checking whether or not the ejector process has been completed, with the remaining amount of the mold closing process. The controller 90 performs the checking of whether or not the ejector process has been completed, until the remaining amount of the mold closing process reaches a value entered into the remaining amount input section 87C.

The remaining amount of the mold closing process may be expressed by the position of the movable platen 13. The position of the movable platen 13 maybe expressed by the remaining distance to a reference position. Here, the reference position of the movable platen 13 can be arbitrarily set, as described above. The position of the movable platen 13 corresponding to the remaining amount which is entered into the remaining amount input section 87C is hereinafter referred to as an ejector retraction confirmation position.

In addition, the remaining amount of the mold closing process can also be expressed by the position of the cross head 20a. In addition, the remaining amount may be expressed by time rather than a position.

The remaining amount input section 87C may be an input box for entering the ejector retraction confirmation position as a numerical value and may be an input box for selecting the ejector retraction confirmation position from a plurality of candidates determined in advance. In the latter case, a candidate list may be displayed as pop-up display on the operation screen 81C according to a predetermined input operation. An operator can select the ejector retraction confirmation position for actual use, from the plurality of candidates determined in advance, by operating the input unit 70 while looking at the candidate list. The current setting may be displayed with a numerical value or the like on the remaining amount input section 87C.

An operator enters the ejector retraction confirmation position into the remaining amount input section 87C by operating the input unit 70 while looking at the operation screen 81C. The controller 90 monitors the position of the movable platen 13 during the mold closing process and performs the checking of whether or not the ejector process has been completed, until the movable platen 13 reaches the ejector retraction confirmation position.

The checking may be performed at either of a timing when the movable platen 13 reaches the ejector retraction confirmation position and a timing before the movable platen 13 reaches the ejector retraction confirmation position. The ejector retraction confirmation position is a limit position for performing the checking of whether or not the ejector process has been completed.

Whether or not the ejector process has been completed can be confirmed by whether or not the ejector rod 53 has retracted to the retraction completion position. The controller 90 determines that the ejector process has been completed, by the ejector rod 53 having retracted to the retraction completion position.

The controller 90 continues the mold closing process in a case where the completion of the ejector process could be confirmed, such as a case where the ejector rod 53 has retracted to the retraction completion position. On the other hand, the controller 90 interrupts the mold closing process in a case where the completion of the ejector process cannot be confirmed, such as a case where the ejector rod 53 does not retract to the retraction completion position. Damage to the mold unit 30 or the ejector unit 50 can be prevented. The ejector retraction confirmation position may be a limit position for performing a determination of whether or not to continue with the mold closing process.

In a case where the completion of the ejector process cannot be confirmed, the controller 90 may interrupt the cycle operation to repeatedly manufacture a molding product and output a warning to an output unit such as the display unit 80. As the output unit, in addition to the display unit 80, a speaker or the like can be used.

In a case where the completion of the ejector process cannot be confirmed, the controller 90 may temporarily interrupt the mold closing process, wait for the completion of the ejector process, and thereafter, resume the mold closing process. In a case where the ejector process is not completed within a predetermined period of time after the mold closing process is temporarily interrupted, the controller 90 may interrupt the cycle operation and output a warning to the output unit.

The remaining amount limit input section 88C is an input box for entering a limit of a range capable of being entered into the remaining amount input section 87C. The controller 90 prohibits input outside the above range in the remaining amount input section 87C. Incorrect setting of the ejector retraction confirmation position by an operator can be prevented. The current setting may be displayed with a numerical value or the like on the remaining amount limit input section 88C.

For example, the remaining amount limit input section 88C may be an input box for entering the lower limit of the ejector retraction confirmation position. The controller 90 prohibits input below the lower limit in the remaining amount input section 87C. The lower limit of the ejector retraction confirmation position is set so as to be able to prevent damage to the mold unit 30 or the ejector unit 50 and is set based on the result of a test or simulation.

In addition, the remaining amount limit input section 88C of this embodiment is an input box for entering the lower limit. However, the remaining amount limit input section 88C may be an input box for entering the upper limit. The controller 90 prohibits input exceeding the upper limit in the remaining amount input section 87C. The upper limit is set, whereby it is possible to avoid the situation where unnecessary interruption frequently occurs. Both the input boxes may be provided in the operation screen 81C.

A password may be set such that only a specific operator can change the setting of the limit of the remaining amount. A password input section for entering the password is the same as the password input section 89A shown in Fig. 3, and therefore, illustration and description thereof are omitted.

In addition, the remaining amount limit input section 88C of this embodiment is provided in the same operation screen as the remaining amount input section 87C. However, the remaining amount limit input section 88C may be provided in a different operation screen and be changed over and displayed. The remaining amount limit input section 88C may be displayed only in a case where a valid password has been entered into the password input section.

The embodiment of the injection molding machine has been described above. However, the present invention is not limited to the above-described embodiment, and various modifications and improvements can be made within the scope of the concept of the present invention stated in the appended claims.

For example, the remaining amount input section or the remaining amount limit input section may be applied to not only the operation screen 81C shown in Fig. 6, but also the operation screen 81 shown in Fig. 3, the operation screen 81B shown in Fig. 5, or the like.

## Claims

1. An injection molding machine comprising:
a controller (90) which controls a plurality of molding processes; and
a display unit (80) which displays an operation screen (81, 81A, or 81C) which is used in setting of the plurality of molding processes,
wherein the operation screen (81) includes an overlap amount input section (83) for entering an overlap amount between the plurality of molding processes,
**characterized in that**
the operation screen (81) includes an overlap amount limit input section (85) for entering a limit of a range capable of being entered into the overlap amount input section (83).

2. The injection molding machine according to Claim 1, wherein the operation screen (81A) includes a password input section (89A) for entering a password to cancel an input prohibition in the overlap amount limit input section (85).

3. The injection molding machine according to Claim 1 or 2, wherein the operation screen (81C) includes a remaining amount input section (87C) for entering a timing of checking whether or not one of the molding processes has been completed, as a remaining amount of the other molding process, and
the controller (90) performs the checking until the remaining amount reaches a value entered into the remaining amount input section (87C).

4. The injection molding machine according to Claim 3, wherein the operation screen (81C) includes a remaining amount limit input section (88C) for entering a limit of a range capable of being entered into the remaining amount input section (87C).

5. The injection molding machine according to Claim 4, wherein the operation screen (81C) includes a password input section for entering a password to cancel an input prohibition in the remaining amount limit input section (88C).

6. The injection molding machine according to any one of the Claims 1 to 5, wherein the overlap amount input section (83) is an input box for entering an overlap amount position as a numerical value and is an input box for selecting the overlap amount position from a plurality of candidates determined in advance.

7. The injection molding machine according to Claim 6, wherein a candidate list is displayed as pop-up display on the operation screen (81) according to a predetermined input operation.

8. The injection molding machine according to Claim 6 or 7, wherein the operation screen (81) is configured that an operator can select the overlap amount position for actual use, from the plurality of candidates determined in advance.

9. The injection molding machine according to any one of the Claims 1 to 8, wherein the overlap amount between the molding processes is an overlap amount between a mold closing process and a filling process.

10. The injection molding machine according to any one of the Claims 1 to 9, wherein the overlap amount between the molding processes is an overlap amount between a cooling process and a mold opening process.

11. The injection molding machine according to any one of the Claims 1 to 10, wherein the overlap amount between the molding processes is an overlap amount between an ejector process and a mold closing process.

12. A method for operating an injection molding machine according to any one of the Claims 1 to 13, the method comprising the steps of
- displaying an overlap amount limit input section (85) on the operation screen (81), and
- entering a limit of a range capable of being entered into the overlap amount input section (83) by an operator.

## Patentansprüche

1. Spritzgießmaschine, umfassend:
eine Steuerung (90), die eine Mehrzahl von Spritzgießvorgängen steuert, und
eine Anzeigeeinheit (80), die einen Bedienbildschirm (81, 81A oder 81C) anzeigt, der zum Einstellen der Mehrzahl von Spritzgießvorgängen verwendet wird,
worin der Bedienbildschirm (81) einen Überlappungsbetrag-Eingabebereich (83) zum Eingeben eines Überlappungsbetrags zwischen der Mehrzahl von Spritzgießvorgängen beinhaltet,
**dadurch gekennzeichnet, dass** der Betriebsbildschirm (81) einen Überlappungsbetragsgrenzen-Eingabebereich (85) einschließt, um eine Grenze für einen Bereich einzugeben, der in den Überlappungsbetrag-Eingabebereich (83) eingegeben werden kann.

2. Spritzgießmaschine nach Anspruch 1, worin der Bedienbildschirm (81) einen Passwort-Eingabebereich (89A) zum Eingeben eines Passwortes umfasst, um eine Eingabeverhinderung in dem Überlappungsbetragsgrenzen-Eingabebereich (85) außer Kraft zu setzen.

3. Spritzgießmaschine nach Anspruch 1 oder 2, worin der Bedienbildschirm (81C) einen Restbetrag-Eingabebereich (87C) zum Eingeben eines Zeitpunkts für das Überprüfen, ob einer der Spritzgießvorgänge abgeschlossen wurde oder nicht, als Restbetrag des anderen Spritzgießvorgangs umfasst, und worin die Steuerung (90) das Überprüfen durchführt, bis der Restbetrag einen Wert erreicht, der in den Restbetrag-Eingabebereich (87C) eingegeben wurde.

4. Spritzgießmaschine nach Anspruch 3, worin der Bedienbildschirm (81C) einen Restbetragsgrenzen-Eingabebereich (88C) einschließt, um eine Grenze für einen Bereich einzugeben, der in den Restbetrag-Eingabebereich (87C) eingegeben werden kann.

5. Spritzgießmaschine nach Anspruch 4, worin der Bedienbildschirm (81) einen Passwort-Eingabebereich zum Eingeben eines Passwortes umfasst, um eine Eingabeverhinderung in dem Restbetragsgrenzen-Eingabebereich (88C) außer Kraft zu setzen.

6. Spritzgießmaschine nach einem der Ansprüche 1 bis 5, worin der Überlappungsbetrags-Eingabebereich (83) ein Eingabefeld zum Eingeben einer Überlappungsbetragsposition als numerischem Wert ist und ein Eingabefeld zum Auswählen der Überlappungsbetragsposition aus einer Mehrzahl von vorab festgelegten Auswahlmöglichkeiten ist.

7. Spritzgießmaschine nach Anspruch 6, worin eine Liste an Auswahlmöglichkeiten als Pop-Up-Anzeige auf dem Bedienbildschirm angezeigt wird, abhängig von einer vorherbestimmten Eingabetätigkeit.

8. Spritzgießmaschine nach Anspruch 6 oder 7, worin der Bedienbildschirm (81) so konfiguriert ist, dass ein Bediener die Überlappungsbetragsposition für den tatsächlichen Betrieb aus der Mehrzahl von vorab festgelegten Auswahlmöglichkeiten auswählen kann.

9. Spritzgießmaschine nach einem der Ansprüche 1 bis 8, worin der Überlappungsbetrag zwischen den Spritzgießvorgängen ein Überlappungsbetrag zwischen einem Werkzeugschließvorgang und einem Einspritzvorgang ist.

10. Spritzgießmaschine nach einem der Ansprüche 1 bis 9, worin der Überlappungsbetrag zwischen den Spritzgießvorgängen ein Überlappungsbetrag zwischen einem Abkühlvorgang und einem Werkzeugöffnungsvorgang ist.

11. Spritzgießmaschine nach einem der Ansprüche 1 bis 10, worin der Überlappungsbetrag zwischen den Spritzgießvorgängen ein Überlappungsbetrag zwischen einem Ausstoßvorgang und einem Werkzeugschließvorgang ist.

12. Ein Verfahren zum Betreiben einer Spritzgießmaschine nach einem der Anspräche 1 bis 11, wobei das Verfahren die folgenden Schritte umfasst:
- Anzeigen eines Überlappungsbetragsgrenzen-Eingabebereiches (85) auf dem Bedienbildschirm (81) und
- Eingeben einer Grenze eines Bereichs, der durch einen Bediener in den Überlappungsbetrag-Eingabebereich (83) eingegeben werden kann.

## Revendications

1. Machine de moulage par injection comprenant :
un contrôleur (90) qui contrôle une pluralité de processus de moulage ; et
une unité d'affichage (80) qui affiche un écran d'utilisation (81, 81A ou 81C) qui est employée pour le réglage de la pluralité de processus de moulage,
dans lequel l'écran d'utilisation (81) comporte une section d'entrée de quantité de chevauchement (83) pour entrer une quantité de chevauchement entre la pluralité de processus de moulage,
**caractérisé en ce que**
l'écran d'utilisation (81) comporte une section d'entrée de limite de quantité de chevauchement (85) pour entrer une limite d'une plage pouvant être entrée dans la section d'entrée de quantité de chevauchement (83).

2. Machine de moulage par injection selon la revendication 1, dans laquelle l'écran d'utilisation (81A) comporte une section d'entrée de mot de passe (89A) pour entrer un mot de passe pour annuler une prohibition d'entrée dans la section d'entrée de limite de quantité de chevauchement (85).

3. Machine de moulage par injection selon la revendication 1 ou 2, dans laquelle l'écran d'utilisation (81C) comporte une section d'entrée de quantité restante (87C) pour entrer un moment de vérification du fait qu'un des processus de moulage a ou n'a pas été achevé, comme une quantité restante de l'autre processus de moulage, et
le contrôleur (90) effectue la vérification jusqu'à ce que la quantité restante atteigne une valeur entrée dans la section d'entrée de quantité restante (87C).

4. Machine de moulage par injection selon la revendication 3, dans laquelle l'écran d'utilisation (81C) comporte une section d'entrée de limite de quantité restante (88C) pour entrer une limite d'une plage pouvant être entrée dans la section d'entrée de quantité restante (87C).

5. Machine de moulage par injection selon la revendication 4, dans laquelle l'écran d'utilisation (81C) comporte une section d'entrée de mot de passe pour entrer un mot de passe pour annuler une prohibition d'entrée dans la section d'entrée de limite de quantité restante (88C).

6. Machine de moulage par injection selon l'une quelconque des revendications 1 à 5, dans laquelle la section d'entrée de quantité de chevauchement (83) est une boîte d'entrée pour entrer une position de quantité de chevauchement comme une valeur numérique et est une boîte d'entrée pour sélectionner la position de quantité de chevauchement parmi une pluralité de candidats déterminée à l'avance.

7. Machine de moulage par injection selon la revendication 6, dans laquelle une liste de candidats est affichée comme un affichage contextuel sur l'écran d'utilisation (81) selon une opération d'entrée prédéterminée.

8. Machine de moulage par injection selon la revendication 6 ou 7, dans laquelle l'écran d'utilisation (81) est configuré de sorte qu'un utilisateur peut sélectionner la position de quantité de chevauchement pour un usage effectif, parmi la pluralité de candidats déterminée à l'avance.

9. Machine de moulage par injection selon l'une quelconque des revendications 1 à 8, dans laquelle la quantité de chevauchement entre les processus de moulage est une quantité de chevauchement entre un processus de fermeture de moule et un processus de remplissage.

10. Machine de moulage par injection selon l'une quelconque des revendications 1 à 9, dans laquelle la quantité de chevauchement entre les processus de moulage est une quantité de chevauchement entre un processus de refroidissement et un processus d'ouverture de moule.

11. Machine de moulage par injection selon l'une quelconque des revendications 1 à 10, dans laquelle la quantité de chevauchement entre les processus de moulage est une quantité de chevauchement entre un processus d'éjection et un processus de fermeture de moule.

12. Procédé d'utilisation d'une machine de moulage par injection selon l'une quelconque des revendications 1 à 13, le procédé comprenant les étapes suivantes
- l'affichage d'une section d'entrée de limite de quantité de chevauchement (85) sur l'écran d'utilisation (81), et
- l'entrée d'une limite d'une plage pouvant être entrée dans la section d'entrée de quantité de chevauchement (83) par un utilisateur.
